# EUROPEAN PATENT SPECIFICATION

(11) **EP 3 896 588 B1**
(45) Date of publication and mention of the grant of the patent: **06.03.2024**
(21) Application number: 20170266.9
(22) Date of filing: 18.04.2020
(51) Int. Cl.: G06F 21/46, H04L 9/40

(54) **BACKLOCK ACCESS FOR LOGGING INTO A COMPUTING DEVICE**
BACKLOCK-ZUGANG ZUM EINLOGGEN IN EINE RECHNERVORRICHTUNG
ACCÈS À VERROUILLAGE POUR LA CONNEXION À UN DISPOSITIF INFORMATIQUE

(43) Date of publication of application: 20.10.2021
(73) Proprietor: Deutsche Telekom AG, 53113 Bonn (DE)
(72) Inventor: SCHRAUB, Stefan, 61239 Ober-Mörlen (DE)
(74) Representative: RDL Patentanwälte PartG mbB

(56) References cited:
- CA-A1- 3 068 090
- US-A1- 2014 223 525
- US-A1- 2015 128 254
- US-B1- 8 775 820

## Description

The invention relates to a method for logging into a computing device, wherein a computing device is logged into by entering a combination of a valid user name and a password at a login prompt being provided by the computing device. The invention further relates to a computing device, a backlock access password server, a network operations center (NOC) server, a telecommunication network and a computer program product.

Login methods of the initially mentioned type are known and widely used for accessing a computing device, i.e. a hardware component. For instance, the computing device may comprise one of a desktop computer, a smartphone, a workstation or a server.

After having been initially configured, a reconfiguration of the computing device may turn out to be necessary during a lifetime of the computing system. For reconfiguring the computing device a competent user, e.g. a service technician, usually accesses the running computing device by logging into the computing device as a valid user having the right for configuring the computing device.

However, a login of the competent user is excluded when no password being associated with a valid user having the required right is known to the competent user or can be found out by the competent user. Without an appropriate user password a reconfiguration of the computing device can only be accomplished by performing a factory reset and a complete configuration of the computing device which is time consuming and requires the competent person to gather a lot of information concerning the configuration of the computing device.

It is, therefore, an object of the invention to suggest a method for logging into a computing device without a password being associated with a valid user name. Further objects of the invention are a computing device, a backlock access password server, a network operations center server and a telecommunication network.

A first aspect of the invention is a method for logging into a computing device, wherein a computing device is logged into by entering a combination of a valid user name and a password at a login prompt being provided by the computing device. The password generally is a user password being associated with the valid user name, i.e. a password chosen by the user logging in with the valid user name. The lock prompt may be configured as an interactive form comprising a user name input field and a password input field. The interactive form may be displayed on a screen of the computing device.

The computing device is logged into by entering a combination of at least one valid user name and a backlock access password (BPW) being associated with the computing device at the login prompt. The backlock access password depends on the computing device and is not chosen by a user. In other words, the computing device determines the backlock access password.

US 2015/128254 A1 discloses a login method wherein a computing device is logged into by entering a valid user name and a device-dependent password. The device-dependent password is generated by a distant network operations center and received by phone.

In many embodiments, the at least one valid user name is a default administrative user name or a default backlock access user name or a user name being registered for the computing device. A name of the default administrative user name may be 'admin' or 'root' depending on the operation system. The user name being registered for the computing device may be a local user name or a central user name, e.g. a domain user name, and must have the right for configuring the computing device. A name of the default backlock access user might be chosen to be 'config', 'backlock access' and the like.

According to the invention, the computing device generates the backlock access password when the user name having been entered at the login prompt is a valid user name and the password having been entered at the login prompt is not a user password being associated with the valid user name. Thus, the backlock access password is not stored as such. Rather is it generated automatically by the computing device for comparing with a password entered at the login prompt each time it applies. The computing device may generate the backlock access password when a password entered at the login prompt differs from the user password being associated with the user name entered at the login prompt. Alternatively or additionally, the computing device may generate the backlock access password for a predetermined user name, e.g. the name of the default backlock access user.

Preferably, the computing device generates the backlock access password depending on a character string representing a hostname of the computing device, a character string representing a serial number of the computing device and a binary value representing a special identifier of the computing device. The hostname, the serial number and the special identifier are related to and exclusively determined by the computing device and so are the character strings representing the hostname and the serial number and the binary value representing the special identifier. The binary value representing the special identifier of the computing device is not publicly available.

In other embodiments, a backlock access password server generates the backlock access password upon a user request depending on a character string representing a hostname of the computing device, a character string representing a serial number of the computing device and a binary value representing a special identifier of the computing device. The backlock access password server is configured for generating the backlock access password in the same way the computing device generates the backlock access password. Accordingly, the backlock access password may be requested from the competent user from the backlock access password server. The competent user may request the backlock access password by entering the request into a portal provided by the backlock access password server. The request may comprise any unique identifier being associated with the computing device, e.g. the serial number.

The hostname character string, the serial number character string or the special identifier binary value may be stored on and automatically retrieved from a network operations center server of a telecommunication network. The backlock access password server queries the network operations center server when the competent user requests the backlock access password.

The backlock access password server advantageously transmits the generated backlock access password to an e-mail address being stored on the backlock access password server or the network operations center server. The e-mail address may be an e-mail address of the competent user. Thus, the backlock access password is protected from a misuse by an unauthorized user.

Transmitting preferably comprises generating an e-mail comprising the generated backlock access password, encrypting the generated e-mail and sending the encrypted e-mail. Due to the encryption the security of the method is further increased.

In another embodiment, the computing device transmits a monitoring message to the backlock access password server after having been logged into by entering the backlock access password at the login prompt. The monitoring message allows the backlock access password server for another security check in order to further increase the method. For instance, the backlock access password may alert the competent person, e.g. via e-mail, if the backlock access password is used for logging into the computing device without the backlock access password having been requested before.

It is preferred that generating the backlock access password comprises converting the hostname character string into a hostname binary value and converting the serial number character string into a serial number binary value. This conversion is essentially a type casting.

Generating the backlock access password may comprise calculating a binary sum by summing the hostname binary value and the serial number binary value. Calculating a sum is not bijective. Hence, the calculated sum is a hash value depending both on the hostname and the serial number.

Generating the backlock access password comprises generating a permuted value by cyclically permuting the binary sum a number of times indicated by a character string representing a decimal number. The cyclic permutation disarranges the bits of the binary sum depending on the decimal number.

Generating the backlock access password may further comprise converting the special identifier binary value into the decimal number character string. This conversion is essentially a type casting.

Generating the backlock access password advantageously comprises converting the permuted value into a character string being the backlock access password. This conversion is essentially a type casting
in attractive embodiments converting into a binary value and converting into a character string comprises bytewise ASCII (American standard code for information interchange) decoding and bytewise ASCII encoding, respectively. The so-called ASCII bijectively maps 256 byte values to characters, i.e. letters, figures and punctuation marks.

A second aspect of the invention is a computing device. The computing device may be a node of a telecommunication network.

According to the invention, the computing device is configured for carrying out an inventive method, i.e. for participating in the inventive method, and being logged into by entering a backlock access password being associated with the computing device. The backlock access password may be used by a competent user if no user password being associated with a valid user name and registered for the computing device is available. The computing device may be reconfigured even if no user password associated with a user name registered for the computing device is known.

A third aspect of the invention is a backlock access password server for a telecommunication network.

According to the invention, the backlock access password server is configured for carrying out an inventive method, i.e. for participating in the inventive method, and providing a competent user with a backlock access password for the inventive computing device.

A fourth aspect of the invention is a network operation center server for a telecommunication network.

According to the invention, the network operation center server is configured for carrying out an inventive method, i.e. for participating in the inventive method, and providing the backlock access password server with the hostname character string, the serial number character string and the special identifier binary value of the inventive computing device.

A fifth aspect of the invention is a telecommunication network, comprising a network operations center server, a backlock access password server and a computing device. The telecommunication network may comprise a cellular network.

According to the invention, the telecommunication network, i.e. the network operations center server, the backlock access password server and the computing device, is configured to carry out an inventive method. The telecommunication network, i.e. the computing device, may be reconfigured even if no user password associated with a user name registered for the computing device is known.

A sixth aspect of the invention is a computer program product, comprising a computer readable storage medium storing a program code, the program code being executable by a computing device or a backlock access password server or a network operations center server causing the computing device or the backlock access password server or the network operations center server to carry out an inventive method when being executed by a processor of the computing device or the backlock access password server or the network operations center server, respectively. The computer program product may be a CD, a DVD, a USB stick and the like. The program code stored on the computer program product may be executable by the computing device or the backlock access password server or the network operations center server immediately or after having been installed therein, respectively.

It is an essential advantage of the inventive method that the computing device may be reconfigured without a factory reset even in case no user password associated with a valid user name for the computing device is known. As a consequence, adjusting a configuration of the computing device is always possible and requires less time and effort than a complete initial configuration after a factory reset. Thus, the service device may be serviced at very low costs.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

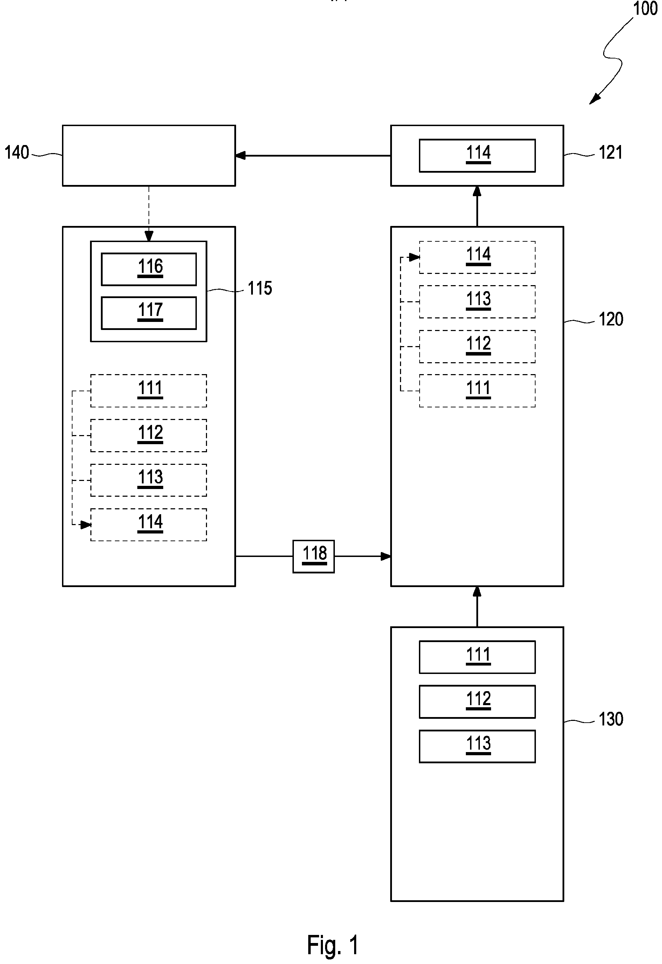

- Fig. 1: schematically shows a block diagram of a telecommunication network according to an embodiment of the invention.

Fig. 1 schematically shows a block diagram of a telecommunication network 100 according to an embodiment of the invention. The telecommunication network 100 comprises a network operations center (NOC) server 130 according to the invention, a backlock access password server 120 according to the invention and a computing device 110 according to the invention.

The computing device 110 may be any node of the telecommunication network 100, e.g. a user equipment (UE) or a server, and may provide a login prompt 115 particularly being configured as an interactive form and comprising a user name input field 116 for entering a character string representing a user name and a password input field 117 for entering a character string representing a password. The computing device 110 stores a character string 111 representing a hostname of the computing device 110, a serial number 112 representing a serial number of the computing device and a binary value 113 representing a special identifier of the computing device 110.

The network operations center server 130 also stores the character string 111 representing the hostname of the computing device 110, the character string 112 representing the serial number of the computing device 110 and binary value 113 representing the special identifier of the computing device 110.

The telecommunication network 100, particularly each of the network operations center server 130, the backlock access password server 120 and the computing device 110, is configured to carry out the method described below.

The telecommunication network 100 may have been configured by means of a computer program product. The computer program product comprises a computer readable storage medium storing a program code, the program code being executable by the computing device 110 or the backlock access password server 120 or the network operations center server 130 causing the computing device 110 or the backlock access password server 120 or the network operations center server 130 to carry out the method described below when being executed by a processor of the computing device 110 or the backlock access password server 120 or the network operations center server 130, respectively.

During a normal operation of the telecommunication network 100 a user logs into the computing device 110 by entering a combination of a valid user name being registered for the computing device 110 and a user password associated with the valid user name at the login prompt 115.

If, however, no user password being associated with a valid user name is available, a competent user, e.g. service technician, may nevertheless log into the computing device 110 by entering a combination of at least one valid user name and a backlock access password 114 being associated with the computing device 110 at the login prompt 115.

The at least one valid user name may be a default administrative user name like 'admin' or 'root' or a default backlock access user name like 'config' or a user name being registered for the computing device 110.

Upon a request of a competent user, e.g. a service technician, the backlock access password server 120 generates the backlock access password 114 depending on the character string 111 representing a hostname of the computing device 110, the character string 112 representing a serial number of the computing device 110 and the binary value 113 representing a special identifier of the computing device 110, the hostname character string 111, the serial number character string 112 and the special identifier binary value 113 being stored on and automatically retrieved from the network operations center server 130 of the telecommunication network 100.

Generating the backlock access password 114 comprises converting the hostname character string 111 into a hostname binary value and converting the serial number character string into a serial number binary value. Generating the backlock access password 114 further comprises calculating a binary sum by summing the hostname binary value and the serial number binary value.

Moreover, generating the backlock access password 114 comprises generating a permuted value by cyclically permuting the binary sum a number of times indicated by a character string representing a decimal number and converting the special identifier binary value into the decimal number character string.

Further, generating the backlock access password 114 comprises converting the permuted value into a character string being the backlock access password 114.

Each step of converting into a binary value and converting into a character string may comprise bytewise ASCII decoding and bytewise ASCII encoding, respectively.

The backlock access password server 120 preferably transmits the generated backlock access password 114 to an e-mail address 140 of the competent user, the e-mail address 140 being stored on the backlock access password server 120 or the network operations center server 130. Transmitting may comprise generating an e-mail 121 comprising the generated backlock access password 114, encrypting the generated e-mail 121 and sending the encrypted e-mail 121.

The competent user enters a valid user name registered for the computing device 110 and the transmitted backlock access password server 120 at the login prompt 115. When the user name having been entered at the login prompt 115 is a valid user name and the password having been entered at the login prompt 115 is not a user password being associated with the valid user name the computing device 110 generates the backlock access password 114 as described above.

Accordingly, the computing device 110 generates the backlock access password 114 depending on the character string 111 representing the hostname of the computing device 110, the character string 112 representing the serial number of the computing device 110 and the binary value 113 representing the special identifier of the computing device 110.

The computing device 110 compares the generated backlock access password 114 with the password entered at the login prompt 115 by the competent user. As the generated backlock access password 114 and the entered password are identical the computing device 110 completes the login of the competent user.

After having been logged into by entering the transmitted backlock access password 114 at the login prompt 115 the computing device 110 provides the competent user with the right for configuring the computing device 110 and may transmit a monitoring message 118 to the backlock access password server 120.

### Reference numerals

- 100: telecommunication network
- 110: computing device
- 111: hostname character string
- 112: serial number character string
- 113: special identifier binary value
- 114: backlock access password (BPW)
- 115: login prompt
- 116: input field user name
- 117: input field password
- 118: monitoring message
- 120: backlock access password server
- 121: e-mail with backlock access password
- 130: network operations center (NOC) server
- 140: e-mail address

## Claims

1. A method for logging into a computing device (110), wherein
- a computing device (110) is logged into by entering a combination of a valid user name and a password at a login prompt (115) being provided by the computing device (110);
- the computing device (110) is logged into by entering a combination of at least one valid user name and a device-dependent password referred to as a backlock access password (114) and being associated with and determined by the computing device (110) at the login prompt (115), **characterized in that**
- the computing device (110) generates the backlock access password (114) when the user name having been entered at the login prompt (115) is a valid user name and the password having been entered at the login prompt (115) is not a user password being associated with the valid user name.

2. The method according to claim 1, wherein the at least one valid user name is a default administrative user name or a default backlock access user name or a user name being registered for the computing device (110).

3. The method according to claim 1 or 2, wherein the computing device (110) generates the backlock access password (114) depending on a character string (111) representing a hostname of the computing device (110), a character string (112) representing a serial number of the computing device (110) and a binary value (113) representing a special identifier of the computing device (110).

4. The method according to one of claims 1 to 3, wherein a backlock access password server (120) generates the backlock access password (114) upon a user request depending on a character string (111) representing a hostname of the computing device (110), a character string (112) representing a serial number of the computing device (110) and a binary value (113) representing a special identifier of the computing device (110), the hostname character string (111), the serial number character string (112) and the special identifier binary value (113) being stored on and automatically retrieved from a network operations center server (130) of a telecommunication network (100).

5. The method according to claim 4, wherein the backlock access password server (120) transmits the generated backlock access password (114) to an e-mail address (140) being stored on the backlock access password server (120) or the network operations center server (130).

6. The method according to claim 5, wherein transmitting comprises generating an e-mail (121) comprising the generated backlock access password (114), encrypting the generated e-mail (121) and sending the encrypted e-mail (121).

7. The method according to one of claims 4 to 6, wherein the computing device (110) transmits a monitoring message (118) to the backlock access password server (120) after having been logged into by entering the backlock access password (114) at the login prompt (115).

8. The method according to one of claims 3 to 7, wherein generating the backlock access password (114) comprises converting the hostname character string (111) into a hostname binary value and converting the serial number character string into a serial number binary value.

9. The method according to claim 8, wherein generating the backlock access password (114) comprises calculating a binary sum by summing the hostname binary value and the serial number binary value.

10. The method according to claim 9, wherein generating the backlock access password (114) comprises generating a permuted value by cyclically permuting the binary sum a number of times indicated by a character string representing a decimal number.

11. The method according to claim 10, wherein generating the backlock access password (114) comprises converting the special identifier binary value into the decimal number character string.

12. The method according to one of claims 10 and 11, wherein generating the backlock access password (114) comprises converting the permuted value into a character string being the backlock access password (114).

13. The method according to one of claims 7, 8, 11 or 12, wherein converting into a binary value and converting into a character string comprises bytewise ASCII decoding and bytewise ASCII encoding, respectively.

14. A telecommunication network, comprising a network operations center server (130), a backlock access password server (120) and a computing device (110), the telecommunication network being configured to carry out a method according to one of claims 1 to 13.

## Patentansprüche

1. Verfahren zum Einloggen in ein Computergerät (110), wobei
- in ein Computergerät (110) eingeloggt wird, indem eine Kombination aus einem gültigen Benutzernamen und einem Passwort bei einer von dem Computergerät (110) bereitgestellten Login-Aufforderung (115) eingegeben wird;
- in das Computergerät (110) eingeloggt wird, indem eine Kombination aus mindestens einem gültigen Benutzernamen und einem geräteabhängigen Passwort eingegeben wird, das als Notzugangspasswort (114) bezeichnet wird und mit dem Computergerät (110) assoziiert ist und von diesem bei der Login-Aufforderung (115) bestimmt wird, **dadurch gekennzeichnet, dass**
- das Computergerät (110) das Notzugangspasswort (114) generiert, wenn der Benutzername, der bei der Login-Aufforderung (115) eingegeben wurde, ein gültiger Benutzername ist und das Passwort, das bei der Login-Aufforderung (115) eingegeben wurde, kein Benutzerpasswort ist, das mit dem gültigen Benutzernamen assoziiert ist.

2. Verfahren nach Anspruch 1, wobei der mindestens eine gültige Benutzername ein standardmäßiger administrativer Benutzername oder ein standardmäßiger Notzugangsbenutzername oder ein für das Computergerät (110) registrierter Benutzername ist.

3. Verfahren nach Anspruch 1 oder 2, wobei das Computergerät (110) das Notzugangspasswort (114) in Abhängigkeit von einer Zeichenkette (111), die einen Hostnamen des Computergeräts (110) darstellt, einer Zeichenkette (112), die eine Seriennummer des Computergeräts (110) darstellt, und einem Binärwert (113), der eine spezielle Kennung des Computergeräts (110) darstellt, generiert.

4. Verfahren nach einem der Ansprüche 1 bis 3, wobei ein Notzugangspasswort-Server (120) das Notzugangspasswort (114) auf eine Benutzeranforderung hin in Abhängigkeit von einer Zeichenkette (111), die einen Hostnamen des Computergeräts (110) darstellt, einer Zeichenkette (112), die eine Seriennummer des Computergeräts (110) darstellt, und einem Binärwert (113), der eine spezielle Kennung des Computergeräts (110) darstellt, generiert, wobei die Hostname-Zeichenkette (111), die Seriennummer-Zeichenkette (112) und der Binärwert der speziellen Kennung (113) auf einem Netzwerkbetriebszentrumsserver (130) eines Telekommunikationsnetzwerks (100) gespeichert und automatisch von diesem abgerufen werden.

5. Verfahren nach Anspruch 4, wobei der Notzugangspasswort-Server (120) das generierte Notzugangspasswort (114) an eine E-Mail-Adresse (140) sendet, die auf dem Notzugangspasswort-Server (120) oder dem Netzwerkbetriebszentrumsserver (130) gespeichert ist.

6. Verfahren nach Anspruch 5, wobei das Übermitteln das Generieren einer E-Mail (121), die das generierte Notzugangspasswort (114) umfasst, das Verschlüsseln der generierten E-Mail (121) und das Senden der verschlüsselten E-Mail (121) umfasst.

7. Verfahren nach einem der Ansprüche 4 bis 6, wobei das Computergerät (110) eine Überwachungsnachricht (118) an den Notzugangspasswort-Server (120) sendet, nachdem in das Computergerät (110) durch Eingabe des Notzugangspassworts (114) bei der Login-Aufforderung (115) eingeloggt wurde.

8. Verfahren nach einem der Ansprüche 3 bis 7, wobei das Generieren des Notzugangspassworts (114) das Umwandeln der Hostnamen-Zeichenkette (111) in einen Hostnamen-Binärwert und das Umwandeln der Seriennummern-Zeichenkette in einen Seriennummern-Binärwert umfasst.

9. Verfahren nach Anspruch 8, wobei das Generieren des Notzugangspassworts (114) das Berechnen einer Binärsumme durch Summieren des Hostnamen-Binärwerts und des Seriennummern-Binärwerts umfasst.

10. Verfahren nach Anspruch 9, wobei das Generieren des Notzugangspassworts (114) das Generieren eines permutierten Werts durch zyklisches Permutieren der Binärsumme um eine Anzahl von Malen, die durch eine eine Dezimalzahl repräsentierende Zeichenkette dargestellt wird, umfasst.

11. Verfahren nach Anspruch 10, wobei das Generieren des Notzugangspassworts (114) das Umwandeln des Binärwerts der speziellen Kennung in die Dezimalzahl-Zeichenkette umfasst.

12. Verfahren nach einem der Ansprüche 10 und 11, wobei das Generieren des Notzugangspassworts (114) das Umwandeln des permutierten Werts in eine Zeichenkette umfasst, die das Notzugangspasswort (114) ist.

13. Verfahren nach einem der Ansprüche 7, 8, 11 oder 12, wobei das Umwandeln in einen Binärwert und das Umwandeln in eine Zeichenkette eine byteweise ASCII-Decodierung bzw. byteweise ASCII-Codierung umfasst.

14. Telekommunikationsnetzwerk, das einen Netzwerkbetriebszentrumsserver (130), einen Notzugangspasswort-Server (120) und ein Computergerät (110) umfasst, wobei das Telekommunikationsnetzwerk dazu konfiguriert ist, ein Verfahren nach einem der Ansprüche 1 bis 13 auszuführen.

## Revendications

1. Procédé de connexion à un dispositif informatique (110),
- un dispositif informatique (110) étant connecté après la saisie d'une combinaison d'un nom d'utilisateur valide et d'un mot de passe à une invite d'ouverture de session (115) fournie par le dispositif informatique (110);
- le dispositif informatique (110) étant connecté après la saisie d'une combinaison d'au moins un nom d'utilisateur valide et d'un mot de passe lié au dispositif appelé mot de passe de secours (114) et associé au dispositif informatique (110) et déterminé par ce dernier à l'invite d'ouverture de session (115), **caractérisé en ce que**
- le dispositif informatique (110) générant le mot de passe de secours (114) lorsque le nom d'utilisateur saisi à l'invite d'ouverture de session (115) est un nom d'utilisateur valide et que le mot de passe saisi à l'invite d'ouverture de session (115) n'est pas un mot de passe d'utilisateur associé au nom d'utilisateur valide.

2. Procédé selon la revendication 1, le au moins un nom d'utilisateur valide étant un nom d'utilisateur administratif par défaut ou un nom d'utilisateur de secours par défaut ou un nom d'utilisateur enregistré pour le dispositif informatique (110).

3. Procédé selon la revendication 1 ou 2, le dispositif informatique (110) générant le mot de passe de secours (114) en fonction d'une chaîne de caractères (111) représentant un nom d'hôte du dispositif informatique (110), d'une chaîne de caractères (112) représentant un numéro de série du dispositif informatique (110) et d'une valeur binaire (113) représentant un identifiant spécial du dispositif informatique (110).

4. Procédé selon l'une des revendications 1 à 3, un serveur de mot de passe de secours (120) générant le mot de passe de secours (114) sur demande de l'utilisateur en fonction d'une chaîne de caractères (111) représentant un nom d'hôte du dispositif informatique (110), d'une chaîne de caractères (112) représentant un numéro de série du dispositif informatique (110) et d'une valeur binaire (113) représentant un identifiant spécial du dispositif informatique (110), la chaîne de caractères de nom d'hôte (111), la chaîne de caractères de numéro de série (112) et la valeur binaire d'identifiant spécial (113) étant stockées et extraites automatiquement d'un serveur de centre d'opérations de réseau (130) d'un réseau de télécommunications (100).

5. Procédé selon la revendication 4, le serveur de mot de passe de secours (120) transmettant le mot de passe de secours généré (114) à une adresse électronique (140) stockée sur le serveur de mot de passe de secours (120) ou sur le serveur du centre d'opérations de réseau (130).

6. Procédé selon la revendication 5, la transmission comprenant la génération d'un courrier électronique (121) comprenant le mot de passe de secours généré (114), le cryptage du courrier électronique généré (121) et l'envoi du courrier électronique crypté (121).

7. Procédé selon l'une des revendications 4 à 6, le dispositif informatique (110) transmettant un message de surveillance (118) au serveur de mot de passe de secours (120) après s'être connecté par saisie du mot de passe de secours (114) à l'invite d'ouverture de session (115).

8. Procédé selon l'une des revendications 3 à 7, la génération du mot de passe de secours (114) comprenant la conversion de la chaîne de caractères du nom d'hôte (111) en une valeur binaire de nom d'hôte et la conversion de la chaîne de caractères de numéro de série en une valeur binaire de numéro de série.

9. Procédé selon la revendication 8, la génération du mot de passe de secours (114) comprenant le calcul d'une somme binaire par addition de la valeur binaire du nom d'hôte et de la valeur binaire du numéro de série.

10. Procédé selon la revendication 9, la génération du mot de passe de secours (114) comprenant la génération d'une valeur permutée en permutant cycliquement la somme binaire un nombre de fois indiqué par une chaîne de caractères représentant un nombre décimal.

11. Procédé selon la revendication 10, la génération du mot de passe de secours (114) comprenant la conversion de la valeur binaire d'identifiant spécial en la chaîne de caractères de nombre décimal.

12. Procédé selon l'une des revendications 10 et 11, la génération du mot de passe de secours (114) comprenant la conversion de la valeur permutée en une chaîne de caractères constituant le mot de passe de secours (114).

13. Procédé selon l'une des revendications 7, 8, 11 ou 12, la conversion en valeur binaire et la conversion en chaîne de caractères comprenant respectivement le décodage ASCII par octet et le codage ASCII par octet.

14. Réseau de télécommunications, comprenant un serveur de centre d'opérations de réseau (130), un serveur de mot de passe de secours (120) et un dispositif informatique (110), le réseau de télécommunications étant configuré pour mettre en oeuvre un procédé selon l'une des revendications 1 à 13.
